# EUROPÄISCHE PATENTSCHRIFT

(11) **EP 1 502 211 B1**
(45) Veröffentlichungstag und Bekanntmachung des Hinweises auf die Patenterteilung: **24.08.2011**
(21) Anmeldenummer: 03727375.2
(22) Anmeldetag: 28.04.2003
(51) Int. Cl.: G06F 17/30, G06F 1/00

(54) **VERFAHREN UND VORRICHTUNG ZUR ZUGRIFFSSTEUERUNG IN WISSENSNETZEN**
Method an device for controlling the access in knowledge networks
PROCEDE ET DISPOSITIF DE COMMANDE D'ACCES DANS DES RESEAUX DE SAVOIRS

(30) Priorität: 26.04.2002 DE 10218905
(43) Veröffentlichungstag der Anmeldung: 02.02.2005
(73) Patentinhaber: Intelligent Views Gmbh, 64293 Darmstadt (DE)
(72) Erfinder: MÖLLER, Clara, 64293 Darmstadt (DE); SCHÜMMER, Jan, 61267 Neu-Anspach (DE); SCHUCKMANN, Christian, 64291 Darmstadt (DE); SIEMON, Elke, 64297 Darmstadt (DE); CLOSHEN, Patrick, 64287 Darmstadt (DE); RATH, Ralf, 69121 Heidelberg (DE); SCHOLZ, Hans, 64293 Darmstadt (DE)
(74) Vertreter: Kewitz, Ansgar
(86) Internationale Anmeldenummer: PCT/EP2003/004373
(87) Internationale Veröffentlichungsnummer: WO 2003/092198

(56) Entgegenhaltungen:
- WO-A-01/41039
- DE-A- 19 954 358
- HSIEH D: "A logic to unify semantic network knowledge systems with object-oriented database models" SYSTEM SCIENCES, 1992. PROCEEDINGS OF THE TWENTY-FIFTH HAWAII INTERNATIONAL CONFERENCE ON KAUAI, HI, USA 7-10 JAN. 1992, LOS ALAMITOS, CA, USA,IEEE COMPUT. SOC, US, 7. Januar 1992 (1992-01-07), Seiten 347-358, XP010025898 ISBN: 0-8186-2420-5
- SANDHU R ET AL: "THE NIST MODEL FOR ROLE-BASED ACCESS CONTROL: TOWARDS A UNIFIED STANDARD" PROCEEDINGS OF THE 5TH. ACM WORKSHOP ON ROLE-BASED ACCESS CONTROL. BERLIN, GERMANY, JULY 26 - 27, 2000, ACM ROLE-BASED ACCESS CONTROL WORKSHOP, NEW YORK, NY: ACM, US, 26. Juli 2000 (2000-07-26), Seiten 47-63, XP000958093 ISBN: 1-58113-259-X
- FERRAIOLO,D.F., BARKLEY,J.F., KUHN,D.R.: "A role-based access control model and reference implementation within a corporate intranet" ACM TRANSACTIONS ON INFORMATION AND SYSTEM SECURITY, Bd. 2, Nr. 1, Februar 1999 (1999-02), Seiten 34-64, XP002275990

## Beschreibung

Die Erfindung betrifft im Wesentlichen ein Verfahren zur Herleitung von Benutzerrechten in einem semantischen Netz.

Semantische Netze werden in verstärktem Maße eingesetzt, um Informationen miteinander zu verknüpfen und um diese zu einem späteren Zeitpunkt wieder zu finden. Diese Form von Netzen mit ihren Algorithmen werden auch Wissensnetze oder Ontologien genannt, wobei Informationsobjekte durch Kanten, die eine bestimmte Semantik aufweisen, miteinander verbunden sind. Eine Navigation durch das Netz erfolgt entlang dieser Kanten und vorzugsweise durch Inferenzalgorithmen. Diese traversieren das Netz auf der Suche nach Aussagen.

Aufgrund der Komplexität von Wissensnetzen besteht der Bedarf, den Zugriff auf bestimmte Bereiche des Netzes einzuschränken oder zu ermöglichen.

Bei den Überlegungen zum Aufbau der Benutzerverwaltung spielen Kriterien wie Effizienz und Verwendbarkeit von vorhandenen Algorithmen und Datenstrukturen eine entscheidende Rolle.

Bekannte Ansätze verfolgen die Zugriffskontrolle auf Tabellenebene, wie dies z. B. aus relationalen Datenbanken bekannt ist.

Aus HSIEH D: "A logic to unify semantic network knowledge systems with object-oriented database models", ist der Aufbau eines semantischen Netzes bekannt.

Aus der Wo 01/41039A2 ist ein Verfahren zur Steuerung des Zugriffs auf Objekte bekannt, bei dem die Objekte mit Schlüssel identifiziert werden, die zu Schlüsselketten zusammengefügt werden, um sie dann einem Benutzer zuzuordnen.

Die DE 199 54 358 A1 offenbart ein Verfahren zur Benutzerrollensteuerung. Hierbei wird einem Benutzer eine Rolle zugewiesen, die mehrere Zugriffsrechte aufweist.

Aufgabe der Erfindung ist es, eine effiziente und flexibel konfigurierbare Zugriffskontrolle bereitzustellen, die technisch und ergonomisch integriert ist und die der Komplexität von Wissensnetzen Rechnung trägt.

Diese Aufgabe wird durch die Erfindungen gemäß den Merkmalen der unabhängigen Ansprüche gelöst. Vorteilhafte Weiterbildungen der Erfindungen werden in den Unteransprüchen beschrieben.

Betrachtet man die Erfindung abstrakt, so werden die Benutzer im gleichen semantischen Netz abgebildet wie die Informationsobjekte. Zugriffsrechte werden aus den semantischen Beziehungen zwischen Benutzern und Informationsobjekten hergeleitet.

Dieser Ansatz hat den Vorteil, dass keine weiteren Metadaten benötigt werden, wie es z. B. bei relationalen Datenbanken der Fall ist. Vielmehr können vorhandene Algorithmen und Inferenz-Regeln verwendet werden, um Benutzerrechte abzuleiten. Weiterhin kann das gleiche effiziente Speichersystem für Inhalte und Zugriffsinformationen genutzt werden. Ein weiterer technischer Vorteil liegt darin begründet, dass keine Anpassung des Codes für die Darstellung der Zugriffsinformationen notwendig ist. Die Benutzer und ihre Relationen zu den Informationsobjekten sind Teil des gesamten Wissensnetzes.

Durch die Verwendung des effizienten Speichersystems und der leistungsfähigen Algorithmen ist es möglich, die Benutzerrechte zum Zeitpunkt des Zugriffes zu berechnen. Dies wiederum hat den Vorteil, dass statt statischer Regeln auch Anfragen definiert werden können, die Rechte beschreiben. Im Detail wird dies weiter unten beschrieben.

Das Rechtesystem der vorliegenden Erfindung entscheidet über Zugriffsberechtigungen anhand von Informationen aus dem Wissensnetz.

Benutzer, die einer Zugriffskontrolle durch das Rechtesystem unterworfen werden sollen, werden als Knoten im Wissensnetz abgebildet.

Diese Benutzerknoten werden mit den Knoten im Wissensnetz in Beziehung gesetzt, die als Ausgangspunkte für die Zugriffsrechte der zugehörigen Benutzer dienen.

Durch die Regeln, die das Rechtesystem konfigurieren, wird festgelegt, welche Zugriffsrechte für den einzelnen Benutzer für die Wissensnetzobjekte bestehen. Hierbei wird überprüft, ob Regeln existieren, die einen Zugriff erlauben. Diese Überprüfung erfolgt dynamisch zur Laufzeit. Damit ist sicher gestellt, das sich Änderungen im Wissensnetz sofort auch in geänderten Zugriffsrechten niederschlagen.

Benutzer können dem System gegenüber in verschiedenen Rollen auftreten. Rollen sind ebenfalls im Wissensnetz definiert und vereinfachen die Konfiguration des Rechtesystems. In Abhängigkeit der Rolle einer Person können somit unterschiedliche Rechte für ganze Gruppen definiert werden.

Formal betrachtet besteht ein Recht r: <o, t, op> aus den drei Komponenten owner, target und operation. Es bedeutet, dass der Besitzer eines Rechts (owner) auf dem Ziel des Rechts (target) die angegebene Operation (operation) ausführen darf. Ist ein Teil des Rechts nicht definiert, dann gilt das Recht für alle Objekte des Wissensnetzes, die für diesen Teil in Frage kommen. Neben der Angabe von einzelnen Elementen können die Komponenten Mengen beinhalten. Hierdurch ist es möglich, dass Gruppen von Besitzern eines Rechts definiert werden.

Rechte werden positiv formuliert. Das heißt, bei einer Überprüfung der Rechte wird eine negative Antwort gegeben, wenn sich keine positive Antwort findet. Bei Anfragen an das Rechtesystem werden Belegungen für den Benutzer, das Ziel bzw. Wissensnetzobjekt und die auszuführende Operation übergeben. Das Rechtesystem sucht in den Rechtedefinitionen nach einer positiven Antwort.

In der bevorzugten Ausführungsform sind die Rechte eines Wissensnetzes in einem Rechtebaum definiert. Dieser Rechtebaum besteht aus Ordnern, die baumartig angeordnet und strukturiert sind. Die Wurzel und somit der oberste Ordner dieses Baumes ist vorzugsweise in der zentralen Stelle des Wissensnetzes, der 'Root' oder Wurzel, verankert. Die Root ist die organisatorische Wurzel des Wissensnetzes. Existiert in dieser bevorzugten Ausführungsform kein Rechtebaum oder besteht dieser Baum nur aus einem Wurzelordner, dann sind alle Operationen für alle Benutzer auf allen Wissensnetzobjekten erlaubt.

Rechte werden in Unterordnern des Wurzelordners des Rechtebaums definiert und angeordnet. Ein Recht gliedert sich in jeweils einen Ordner mit seinen Komponenten, die ebenfalls in Ordnern angeordnet sind. Die Ordner mit ihren Komponenten owner und operations bilden Filter eines Rechts, während der Ordner für das target eine Suchanfrage beinhalten kann. Die Ordner eines Rechts stehen im Rechtebaum nicht nebeneinander, sondern bilden einen Teilbaum des gesamten Rechtebaums. Haben Rechte gleiche Komponenten, z. B. gleiche Operationen, dann kann für sie derselbe Ordner, d. h. dieselben Komponenten verwendet werden. Die anderen Komponenten dieser Rechte gliedern sich dann in anderen Unterordnern auf.

Im Folgenden werden dies einzelnen Komponenten eines Rechtes und die Definitionsmöglichkeiten erläutert. Anschließend wird auf die Kombination der Komponenten eingegangen.

Die Komponenten eines Rechts sind jeweils die Elemente eines Ordners. Sie werden auf unterschiedliche Art und Weise definiert bzw. in ihren Ordnern angeordnet, wie im Folgenden erläutert wird.

### Operationen:

Die Definition von op im Rechtesystem erfolgt vorzugsweise durch Aufzählung der erlaubten Operationen (in der bevorzugten Ausführung "Lesen", "Modifizieren", "Erzeugen" und "Löschen"), die die Elemente eines Operationsordners bilden.

### Benutzer (owner):

Die Menge der owner (o) eines Rechts wird durch die Menge der Elemente des Benutzerordners dargestellt. Für o kommen Individuen (Instanzen) eines Begriffes des Wissensnetzes in Frage, der als Benutzerbegriff bei der Konfiguration des Rechtesystems angegeben wurde. Die Menge der owner eines Rechts kann eine Teilmenge dieser Individuen sein. Die Auswahl der owner kann vorzugsweise auf drei verschiedene Arten beim Bearbeiten des Benutzerordners geschehen: erstens durch explizite Angabe, zweitens durch Erreichbarkeit des Benutzers von einem Wissensnetzobjekt aus, drittens durch Bestimmung der Rolle, die ein Benutzer inne hat.

### 1. Explizite Angabe

Der bzw. die owner eines Rechteteilbaums werden explizit z. B. durch einen Editor eingegeben. Dabei werden Individuen (Instanzen) des Benutzerbegriffs bestimmt.

Sollte z. B. nur der Anfang eines Namens eingegeben werden, dann sucht das System nach einem dazu passenden Objekt unter den Individuen des Benutzerbegriffs.

Beispiel: Der Benutzerbegriff Person hat die Individuen Müller und Meier. Ein weiteres Objekt im Wissensnetz sei 'Mühle'. Wird nun bei der Angabe eines owners nur der Namensanfang 'mü' eingegeben, dann findet das System als mögliches Objekt nur das Individuum Müller und trägt dieses als owner in den Ordner ein. Das Objekt Mühle wird nicht gefunden, da es sich nicht um ein Individuum eines Benutzerbegriffes handelt.

### 2. Von einem Wissensnetzobjekt aus erreichbare Benutzer

Der owner ergibt sich in diesem Fall aus einer Relation, die zwischen einem Wissensnetzobjekt und dem Benutzer besteht. Das Wissensnetzobjekt und die Relation werden in einem Editor (siehe auch oben) explizit angegeben. Der Rechteteilbaum gilt damit für alle Benutzerobjekte, die das Wissensnetzobjekt über diese Relation erreichen können. Das Benutzerobjekt, von dem aus die Relation verfolgt wird, wird erst zum Zeitpunkt der Auswertung des Rechtebaums und nicht bereits bei der Rechtebaumdefinition festgelegt.

### 3. Inhaber einer bestimmten Rolle

Der Inhalt des Benutzerordners wird mittels einer Rolle definiert. Diese Rolle wird beim Bearbeiten des Ordners explizit angegeben. Die Elemente des Benutzerordners werden bei der Rechteprüfung berechnet.

### Zielobjekt (target):

Die Menge der Zielobjekte eines Rechteteilbaums können entweder explizit angegeben oder mittels einer Suchanfrage berechnet werden.

### 1. Explizite Angabe

Jedes Wissensnetzobjekt kann in jeden Ordner, vorzugsweise jedoch nicht in einen Suchordner des Rechtebaums, per drag and drop gezogen werden. Als Element eines entsprechenden Ordners im Rechtebaum ist ein Wissensnetzobjekt Ziel eines Rechts.

### 2. Berechnung der Ziele in einer Suchanfrage

Bei der Berechnung der Ziele durch eine Suchanfrage wird in einem Suchordner eine Suchanfrage aufgebaut. Bei der Rechteüberprüfung wird die Suchanfrage ausgeführt. Die dabei gefundenen Wissensnetzobjekte stellen die Ziele des Rechteteilbaums dar.

Mit Hilfe von Suchanfragen können Regeln für die Ziele von Rechten realisiert werden.

Soll ein Zielobjekt, das in einer Suchanfrage berechnet wurde, von den Benutzern im Rechteteilbaum über die Kanten im Wissensnetz aus erreichbar sein, dann kann dies mittels der Benutzerquery angegeben werden. Aus allen in der Suche angegebenen Relationen kann diejenige als Teilrelation gewählt werden, über die der owner von den Zielobjekten aus erreichbar sein soll. Sollen zum Beispiel in einem Wissensnetz mit Projektdaten für jeden Benutzer nur die Wissensnetzobjekte aus dem jeweils eigenen Projekt zugreifbar sein, so kann dies über die Angabe der Relation 'ist Projektbeteiliger in' als Benutzerquery erreicht werden.

### Invertierung von Definitionen

In Ausnahmefällen kann es sinnvoll sein, Bestandteile eines Rechtes negativ zu formulieren (z. B. "alle Wissensnetzobjekte außer Individuen des Begriffs Person"). Die Negation kann auf Benutzer und Ziele eines Rechts angewendet werden. Sie wird definiert, indem ein Negativfilter im Rechteteilbaum vor den zu negierenden Ordner gesetzt wird. Alle in diesem Ordner enthaltenen Elemente bilden Ausnahmen, für die der Rechteteilbaum nicht gilt.

### Einschränkungen auf Attribute und Relationen

Soll ein Recht nur auf bestimmten Attributen oder Relationen eines Wissensnetzobjektes gelten, dann kann dies an jeder Stelle im Rechtebaum definiert werden. Allerdings ist dabei zu beachten, dass diese Einschränkung vorzugsweise für den ganzen Unterbaum gilt und die Rechte in diesem Teilbaum noch für diese Objekte mit dieser Einschränkung gelten. Dass heißt, wenn im Wurzelordner des Rechtebaums definiert wird, dass nur auf den Attributen Name und Telefonnummer der Individuen von Person Operationen ausgeführt werden dürfen, dann gelten alle Rechte in den Unterordnern maximal für diese Attribute auf diesen Individuen unabhängig von den Elementen in diesen Ordnern.

### Überprüfung eines Rechts

Bei der Überprüfung, ob ein Benutzer eine Operation auf einem Wissensnetzobjekt ausführen darf, werden alle Teilbäume des Rechtebaums so lange durchlaufen, bis die in der Anfrage formulierten Anforderungen in einem der Teilbäume erfüllt werden können. In diesem Fall ist der angefragte Zugriff erlaubt. Findet sich kein der Anfrage entsprechender Teilbaum, dann wird der Zugriff als nicht erlaubt zurückgewiesen.

In jedem Ordner wird geprüft, ob das target der Anfrage ein Element des Ordners ist. Aus diesem Grund können Wissensnetzobjekte als targets in Benutzer- und Operationsordner gezogen werden.

Die Ordner eines Teilbaums werden rekursiv überprüft. Die Ordner für Operationen und Benutzer verhalten sich wie Filter. Die Unterordner dieser Ordner werden überprüft, wenn die zu überprüfende Operation oder der Benutzer das Filterkriterium erfüllt. Ist dies der Fall, dann werden entweder die Unterordner geprüft oder, wenn keine vorhanden sind, wird eine positive Antwort zurückgegeben.

In einem Suchordner wird geprüft, ob das target der Anfrage ein Element der Menge ist, die bei Ausführung der in dem Ordner angegebenen Suchanfrage berechnet wird. Ist das der Fall, dann ist die Antwort auf die Überprüfung positiv.

Im Folgenden wird die Erfindung anhand von Ausführungsbeispielen näher erläutert, die in den Figuren schematisch dargestellt sind. Gleiche Bezugsziffern in den einzelnen Figuren bezeichnen dabei gleiche Elemente. Im Einzelnen zeigt:
- Fig. 1: Ausschnitt aus einem Wissensnetz mit dem Benutzerknoten 'Frau Möller', zuständig für das Wissensnetzobjekt 'Wohnhaus Reiber-Straße';
- Fig. 2: Rechte, in Baumform mit Operationsordnern und Benutzerordnern;
- Fig. 3: Rechteteilbaum mit Negativfilter

Im Rahmen der Erfindung sind zahlreiche Abwandlungen und Weiterbildungen der beschriebenen Ausführungsbeispiele verwirklichbar.

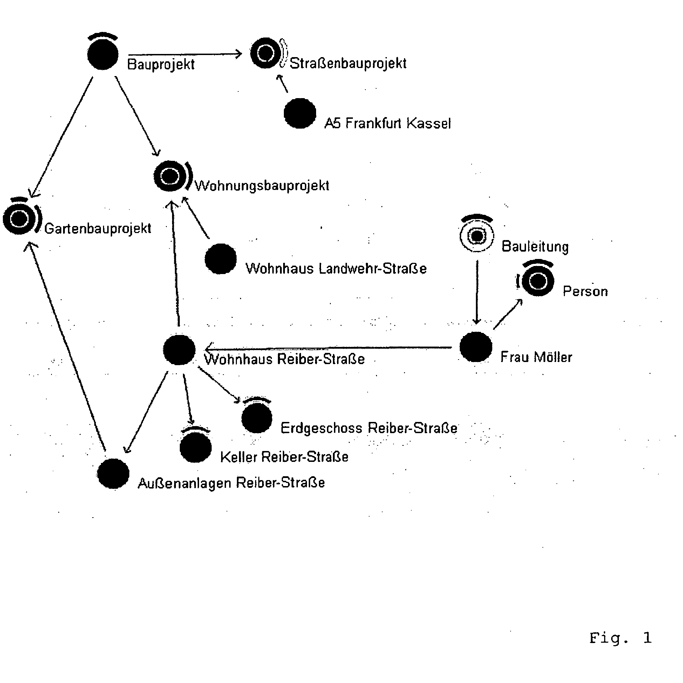

Figur 1 zeigt einen Ausschnitt aus einem Wissensnetz, in dem die Projektstruktur einer Baufirma abgelegt ist. So ist Benutzer 'Frau Möller' für das Projekt 'Wohnhaus Reiber-"Straße' in der Rolle als 'Bauleitung' zuständig.

Das Rechtesystem kann nun derart konfiguriert werden, das Frau Möller z. B. Schreibrecht auf die zu dem Bauprojekt 'Wohnhaus Reiber-Straße' gehörenden Bauabschnitte erhält. Bauabschnitte anderer Bauprojekte (z. B. 'Garage Landwehr-Straße'), für die Frau Möller nicht zuständig ist, können von ihr nicht bearbeitet werden. Neue Bauabschnitte, z. B. im Bereich 'Außenanlagen Reiber-Straße', fallen automatisch in den Zugriffsbereich von Frau Möller. Änderungen im Wissensnetz - z. B. eine Umstrukturierung, bei der die Zuständigkeiten für 'Wohnungsbau' und 'Landschaftsbau' organisatorisch getrennt werden, verändern automatisch auch die Zugriffsberechtigungen der betroffenen Benutzer (in diesem Fall würde Frau Möller ihr Schreibrecht an 'Außenanlagen Reiber-Straße' verlieren).

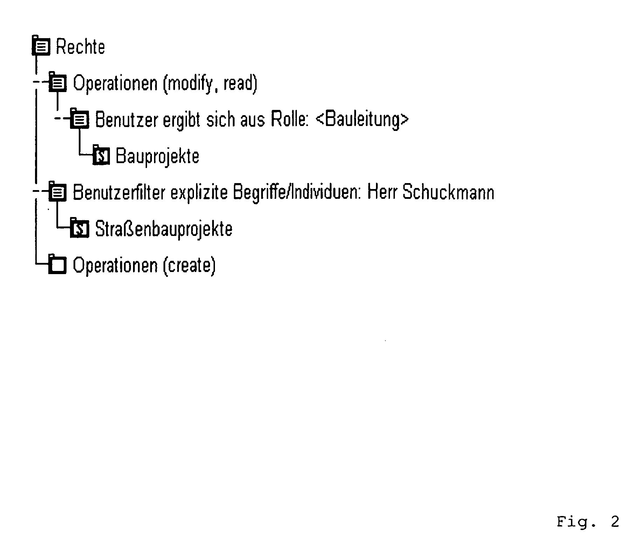

Die Komponenten eines Rechts werden in Ordnern definiert, die im Rechtebaum einen Teilbaum bilden (siehe Figur 2). In den Blättern des Rechtebaums sind zumeist die Zielobjekte der Rechte definiert. In den Ordnern zwischen den Blättern und der Wurzel werden die möglichen Operationen und die Benutzer ausgefiltert. So besagt der oberste Teilbaum in Figur 2, dass die Operationen Modifizieren und Lesen von allen Benutzern, die die Rolle Projektleiter inne haben, auf allen Objekten ausgeführt werden dürfen, die sich aus der Suchanfrage im Ordner ,Projekte' berechnen lassen.

Ein Teilbaum des Rechtebaums muss nicht alle drei Komponenten eines Rechts explizit definieren. Der zweite Teilbaum in Figur 2 beinhaltet zwei Ebenen, da eine Angabe der Operationen fehlt. Somit bedeutet das in diesem Teilbaum definierte Recht, dass der Benutzer 'Herr Schuckmann' alle Operationen auf den berechneten Objekten im Suchordner 'Straßenbauprojekte' ausführen darf.

Der dritte Teilbaum in Figur 2 besagt, dass jeder Benutzer auf allen Objekten des Wissensnetzes die Operation ,Erzeugen' ausführen darf.

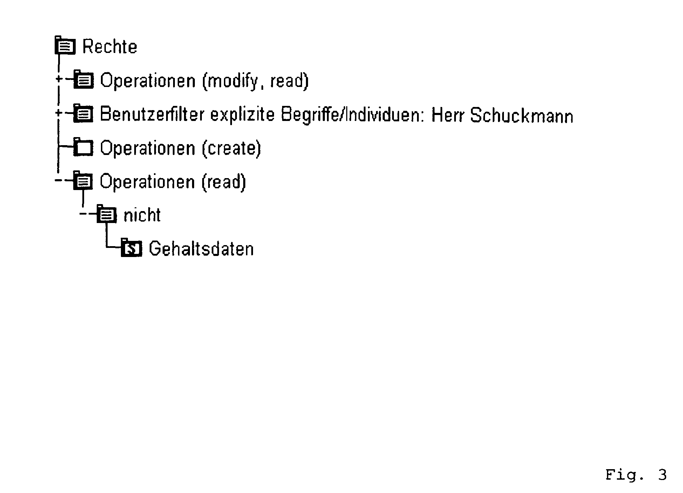

Figur 3 zeigt die Definition von Verboten mithilfe eines Negativfilters im Rechteteilbaum, der vor den zu negierenden Ordner gesetzt wird. Alle in diesem Ordner enthaltenen Elemente bilden Ausnahmen, für die der Rechteteilbaum nicht gilt.

Wie bereits oben beschrieben wurde, gibt der aufgeklappte Rechteteilbaum in Figur 2 an, dass alles außer den Elementen in dem Suchordner 'Konzernunternehmen' von allen Benutzern gelesen werden darf.

### Liste der Literatur:

- 1.: Knowledge Engineering: Principles and Methods (Rudi Studer, V. Richard Benjamins, and Dieter Fensel)
- 2.: Fausto Rabitti, Elisa Bertino, Won Kim, and Darrell Woelk: A Model of Authorization for Next-Generation Database Systems, in: ACM Transactions on Database Systems,Vol. 16, No 1, March 1991
- 3.: Martin S. Olivier and Sebastian H. von Solms: A Taxonomy for Secure Object-Oriented Databases, in: ACM Transactions on Database Systems, Vol. 19, No. 1, March 1994.
- 4.: Gail-Joon Ahn and Ravi Sandhu: Role-Based Authorization Constraints Specification, in: ACM Transactions on Information and System Security, Vol. 3, No. 4, November 2000.
- 5.: Elisa Bertino, Sushil Jajodia, and Pierangela Samaratia: Flexible Authorization Mechanism for Relational Data Management Systems, in: ACM Transactions on Information Systems, Vol. 17, No. 2, April 1999.
- 6.: John F. Sowa: Knowledge Representation: logical, philosophical, and computational foundations. Verlag Brooks/Cole, 2000
- 7.: Sowie weitere Referenzen, die in den oben genannten Dokumenten offenbart wurden.

## Patentansprüche

1. Verfahren zur Zugriffskontrolle in einem auf einem digitalen Speichermedium abgelegten semantischen Netz, das aus Knoten und Kanten besteht, durch Abbilden von Rechten für den Zugriff von Benutzer oder Benutzergruppen auf Informationsobjekte des semantischen Netzes, wobei die Knoten Informationsobjekte darstellen und die Kanten semantische Beziehungen darstellen,
**dadurch gekennzeichnet,**
**dass** Benutzer und/oder Benutzergruppen als Knoten im semantischen Netz abgebildet werden, und dass die Rechte in einem, durch eine Ordnerhierarchie definierten Rechtebaum im semantischen Netz angeordnet sind, der durchlaufen wird, um den Zugriff zu überprüfen, wobei der Zugriff gewährt wird, falls das Recht besteht oder verweigert wird, falls das Recht nicht besteht,wobei über die semantischen Beziehungen die Rechte abgeleitet werden.

2. Verfahren nach dem vorhergehenden Anspruch, **dadurch gekennzeichnet, dass** die Rechte durch Ableitung dynamisch zur Laufzeit bestimmt werden.

3. Verfahren nach einem oder mehreren der vorhergehenden Ansprüche, **dadurch gekennzeichnet, dass** ein Recht durch r:<o, t, op> definiert ist, wobei sich das Recht aus den Komponenten Besitzer, Ziel und Operation zusammensetzt, wobei ein Besitzer (o) des Rechts auf einem Ziel (t) die Operation (op) ausführen darf.

4. Verfahren nach einem oder mehreren der vorhergehenden Verfahrensansprüche, **dadurch gekennzeichnet, dass** Rechte in einer Ordnerhierarchie definiert werden, wobei die Ordnerhierarchie die Ebenen Operation, Benutzer und Ziel umfasst.

5. Verfahren nach einem oder mehreren der vorhergehenden Ansprüche, **dadurch gekennzeichnet, dass** ein Besitzer explizit durch Referenzierung eines Benutzers und/oder einer Benutzergruppe angegeben werden kann oder durch die Existenz einer Relation zwischen einem Informationsobjekt und einem Benutzer oder durch Bestimmung der Rollen, die ein Benutzer hat.

6. Verfahren nach einem oder mehreren der vorhergehenden Ansprüche 3 bis 5, **dadurch gekennzeichnet, dass** das Ziel explizit oder durch eine Suchanfrage bestimmt wird.

7. Verfahren nach einem oder mehreren der vorhergehenden verfahrensansprüche, **dadurch gekennzeichnet, dass** Rechte, die übereinstimmende Komponenten aufweisen, diese Komponenten durch Referenzierung miteinander teilen.

8. Verfahren nach einem oder mehreren der vorhergehenden Ansprüche, **dadurch gekennzeichnet, dass** beim Überprüfen, ob ein Benutzer eine Operation auf einem Informationsobjekt ausführen darf, alle Teilbäume des Rechtebaumes solange durchlaufen werden, bis die Antwort eines Teilbaums eine positive Antwort ergibt; findet sich hingegen kein Teilbaum so ist die Antwort negativ.

9. Datenstruktur zur Ablage von digitalen Rechten zur Zugriffskontrolle in einem auf einem digitalen Speichermedium abgelegten semantischen Netz, das aus Knoten und Kanten besteht, wobei die Rechte den Zugriff von Benutzer oder Benutzergruppen auf Informationsobjekte des semantischen Netzes bestimmen, wobei die Knoten Informationsobjekte darstellen und die Kanten semantische Beziehungen darstellen,
**dadurch gekennzeichnet,**
**dass** durch die Datenstruktur Benutzer und/oder Benutzergruppen als Knoten im semantischen Netz abgebildet sind,
und **dass** die Rechte in einem, durch eine Ordnerhierarchie definierten Rechtebaum im semantischen Netz angeordnet sind, und die Datenstruktur weiterhin Mittel zum Durchlaufen des Rechtebaums und damit zur Überprüfung des Zugriffs definiert, wobei der Zugriff als gewährt gilt, falls das Recht besteht oder als verweigert gilt, falls das Recht nicht besteht,
wobei über die semantischen Beziehungen die Rechte abgeleitet sind.

10. Datenstruktur nach einem oder mehreren der vorhergehenden Datenstrukturansprüche, **dadurch gekennzeichnet, dass** das Recht durch r:<o, t, op> definiert ist, wobei sich das Recht aus den Komponenten Besitzer, Ziel und Operation zusammensetzt, wobei ein Besitzer o des Rechts auf einem Ziel t die Operation op ausführen darf, wobei die Datenstruktur Speicherbereich zur unmittelbaren Ablage oder mittelbaren Ablage, insbesondere durch Zeiger, bereitstellt.

11. Datenträger, **gekennzeichnet durch** computerlesbare Informationen, die das Verfahren nach einem oder mehreren der oben genannten Verfahrensansprüche auf einem geeigneten System ablaufen lassen und/oder die **durch** einen oder mehrere der oben genannten Datenstrukturansprüche implementiert werden.

## Claims

1. Method for controlling the access in a semantic network which is stored on a digital memory medium and consists of nodes and edges, by showing rights for the access of the user or user groups to information objects of the semantic network, the nodes representing information objects and the edges representing semantic relationships,
**characterised in that**
the user and/or user groups are shown as nodes in the semantic network and **in that** the rights are disposed in the semantic network in a rights tree which is defined by a folder hierarchy and is run through in order to check the access, the access being allowed if the right exists or being refused if the right does not exist, the rights being deduced via the semantic relationships.

2. Method according to the preceding claim, **characterised in that** the rights are determined by dynamic deduction relative to the running time.

3. Method according to one or more of the preceding claims, **characterised in that** a right is defined by r:<o, t, op>, the right being composed of the components, owner, target and operation, an owner (o) of the right to a target (t) being allowed to perform the operation (op).

4. Method according to one or more of the preceding method claims, **characterised in that** rights are defined in a folder hierarchy, the folder hierarchy comprising the planes, operation, owner and target.

5. Method according to one or more of the preceding claims, **characterised in that** an owner can be indicated explicitly by referencing a user and/or a user group or by the existence of a relation between an information object and a user or by determination of the roles which a user has.

6. Method according to one or more of the preceding claims 3 to 5, **characterised in that** the target is determined explicitly or by a search query.

7. Method according to one or more of the preceding method claims, **characterised in that** rights which have matching components share these components with each other by referencing.

8. Method according to one or more of the preceding claims, **characterised in that**, when checking whether a user is allowed to perform an operation on an information object, all partial trees of the rights tree are run through until the answer of a partial tree produces a positive answer; if, on the other hand, no partial tree is found, the answer is negative.

9. Data structure for storing digital rights for controlling the access in a semantic network which is stored on a digital memory medium and consists of nodes and edges, the rights determining the access of the user or user groups to information objects of the semantic network, the nodes representing information objects and the edges representing semantic relationships,
**characterised in that**,
due to the data structure, the user and/or user groups are represented as nodes in the semantic network,
and **in that** the rights are disposed in the semantic network in a data tree which is defined by a folder hierarchy, and the data structure furthermore defines means for running through the rights tree and hence for checking the access, the access being considered as allowed if the right exists or considered as refused if the right does not exist, the rights being deduced via the semantic relationships.

10. Data structure according to one or more of the preceding data structure claims, **characterised in that** the right is defined by r:<o, t, op>, the right being composed of the components, owner, target and operation, an owner o of the right to an target t being allowed to perform the operation op, the data structure providing a memory region for direct storage or indirect storage, in particular by pointer.

11. Data carrier, **characterised by** computer-readable information, which allows the method according to one or more of the above-mentioned method claims to run on a suitable system and/or which is implemented by one or more of the above-mentioned data structure claims.

## Revendications

1. Procédé de contrôle d'accès à un réseau sémantique, enregistré sur un support de stockage numérique et composé de noeuds et d'arêtes, grâce à la reproduction de droits d'accès d'utilisateurs ou de groupes d'utilisateurs dans des objets d'informations du réseau sémantique, les noeuds représentant des objets d'information et les arêtes représentant des relations sémantiques,
**caractérisé**
**en ce que** les utilisateurs et/ou groupes d'utilisateurs sont représentés dans le réseau sémantique sous la forme de noeuds et en ce que les droits sont implantés dans le réseau sémantique sous la forme d'un arbre de droits défini par une hiérarchie de classeurs qui est parcourue pour contrôler l'accès, l'accès étant autorisé si le droit existe ou refusé si le droit n'existe pas, les droits étant dérivés à l'aide des relations sémantiques.

2. Procédé selon la revendication précédente, **caractérisé en ce que** les droits sont déterminés dynamiquement par une dérivation lors de l'exécution.

3. Procédé selon l'une ou plusieurs des revendications précédentes, **caractérisé en ce qu'**un droit est défini par r:<o, t, op>, le droit étant constitué des composants propriétaire, cible et opération, un propriétaire (o) du droit sur une cible (t) pouvant exécuter l'opération (op).

4. Procédé selon l'une ou plusieurs des revendications précédentes, **caractérisé en ce que** des droits sont définis dans une hiérarchie de classeurs, la hiérarchie de classeurs comprenant les niveaux opération, utilisateur et cible.

5. Procédé selon l'une ou plusieurs des revendications précédentes, **caractérisé en ce qu'**un propriétaire peut être indiqué explicitement par référence à un utilisateur et/ou à un groupe d'utilisateurs, ou par l'existence d'une relation entre un objet d'informations et un utilisateur, ou par la détermination des rôles d'un utilisateur.

6. Procédé selon l'une ou plusieurs des revendications précédentes 3 à 5, **caractérisé en ce que** la cible est déterminée explicitement ou sous la forme d'une demande de recherche.

7. Procédé selon l'une ou plusieurs des revendications précédentes, **caractérisé en ce que** des droits qui possèdent des composants correspondants partagent ces composants entre eux par référence.

8. Procédé selon l'une ou plusieurs des revendications précédentes, **caractérisé en ce que**, pour déterminer si un utilisateur peut exécuter une opération sur un objet d'informations, tous les sous-arbres de l'arbre des droits sont parcourus jusqu'à ce que la réponse d'un sous-arbre fournisse une réponse positive ; en revanche, si aucun sous-arbre n'est trouvé, la réponse est négative.

9. Structure de données pour l'enregistrement de droits numériques en vue du contrôle d'accès à un réseau sémantique, enregistré sur un support de stockage numérique et composé de noeuds et d'arêtes, les droits déterminant l'accès d'utilisateurs ou de groupes d'utilisateurs à des objets d'informations du réseau sémantique, les noeuds représentant des objets d'informations et les arêtes représentant des relations sémantiques,
**caractérisé**
**en ce que** la structure de données représente les utilisateurs et/ou groupes d'utilisateurs sous la forme de noeuds dans le réseau sémantique ; et
**en ce que** les droits sont implantés dans le réseau sémantique sous la forme d'un arbre de droits défini par une hiérarchie de classeurs et la structure de données définit en outre des moyens de parcours de l'arbre des droits et donc de contrôle de l'accès, l'accès étant considéré comme autorisé si le droit existe ou considéré comme refusé si le droit n'existe pas, les droits étant dérivés à l'aide des relations sémantiques.

10. Structure de données selon l'une ou plusieurs des revendications concernant la structure de données, **caractérisée en ce que** le droit est défini par r:<o, t, op>, le droit étant constitué des composants propriétaire, cible et opération, un propriétaire o du droit sur une cible t pouvant exécuter l'opération op, la structure de données fournissant une zone de mémoire pour l'enregistrement direct ou pour l'enregistrement indirect, en particulier sous la forme de pointeurs.

11. Support de données, **caractérisé par** des informations lisibles par ordinateur qui font exécuter le procédé selon l'une ou plusieurs des revendications ci-dessus concernant le procédé sur un système adéquat et/ou qui sont mises en oeuvre à l'aide d'une ou plusieurs des revendications ci-dessus concernant la structure de données.
